# FASCICULE DE BREVET EUROPEEN

(11) **EP 4 041 992 B1**
(45) Date de publication et mention de la délivrance du brevet: **02.07.2025**
(21) Numéro de dépôt: 20793763.2
(22) Date de dépôt: 08.10.2020
(51) Int. Cl.: F01D 5/08, B22F 5/00, B22F 10/28, B33Y 80/00, F02C 7/18

(54) **INJECTEUR POUR UNE TURBINE HAUTE PRESSION**
INJEKTOR FÜR EINE HOCHDRUCKTURBINE
INJECTOR FOR A HIGH-PRESSURE TURBINE

(30) Priorité: 08.10.2019 FR 1911138
(43) Date de publication de la demande: 17.08.2022
(73) Titulaire: SAFRAN AIRCRAFT ENGINES, 75015 Paris (FR)
(72) Inventeur: LEMONNIER, Jérôme Claude George, 77550 MOISSY-CRAMAYEL (FR); BOISNAULT, Franck Davy, 77550 MOISSY-CRAMAYEL (FR); KUHN, Nicolas Li Yen, 77550 MOISSY-CRAMAYEL (FR); VAN NOORT, Antoine Bruno, 77550 MOISSY-CRAMAYEL (FR)
(74) Mandataire: Regimbeau
(86) Numéro de dépôt international: PCT/FR2020/051769
(87) Numéro de publication internationale: WO 2021/069838

(56) Documents cités:
- EP-A1- 3 130 753
- EP-A1- 3 228 816
- DE-A1- 102007 007 090
- US-A1- 2011 250 057
- US-A1- 2014 072 420

## Description

### DOMAINE DE L'INVENTION

La présente invention se rapporte au domaine général de la ventilation d'une turbine haute pression d'une turbomachine à double corps, telle qu'un turboréacteur d'avion. Plus précisément, l'invention concerne un injecteur pour une turbine haute pression.

### ETAT DE LA TECHNIQUE

Une turbomachine à double corps comprend notamment une turbine haute-pression qui est positionnée en sortie d'une chambre de combustion pour récupérer de l'énergie d'un flux de gaz de combustion issus de la chambre de combustion et entraîner en rotation grâce à cette récupération un compresseur haute-pression de la turbomachine disposé en amont de la chambre de combustion et alimentant cette dernière en air sous pression.

Typiquement, la turbine haute-pression comprend un disque de rotor disposé en sortie de la chambre de combustion et sur lequel sont montées des aubes de turbine entraînées en rotation par le flux de gaz éjectés par cette chambre de combustion.

Du fait des températures élevées atteintes par les gaz de combustion, le disque de rotor, et les aubes de turbine qu'il porte, sont soumis à d'importantes contraintes thermiques pouvant induire des dilatations. Pour limiter l'impact négatif de ces contraintes thermiques sur la durée de vie des aubes de turbine, ces dernières sont munies de circuits internes de refroidissement qui comprennent des conduits parcourus par de l'air de ventilation prélevé en fond de chambre de combustion.

Cet air de ventilation est généralement amené dans une cavité annulaire par des injecteurs d'air de ventilation répartis circonférentiellement autour de l'axe longitudinal de la turbomachine. Les injecteurs sont raccordés à un espace annulaire de contournement qui s'étend autour de la chambre de combustion, cet espace annulaire permettant d'acheminer de l'air de ventilation provenant du fond du compresseur vers la turbine de la turbomachine, le compresseur étant situé en amont de la chambre de combustion et alimentant celle-ci en air sous pression pour la combustion des gaz. L'air de ventilation sortant des injecteurs pénètre dans la cavité en traversant des orifices formés dans un flasque d'étanchéité disposé en amont du disque de rotor. La cavité communique avec les circuits internes de refroidissement aménagés à l'intérieur des aubes de turbine. On pourra se référer aux publications FR 2,841,591 et FR 2,937,371 qui décrivent des exemples d'une telle architecture de turbine haute-pression.

Généralement, les injecteurs sont axiaux (i.e. l'air y circule sensiblement parallèlement à un axe de rotation de la turbomachine) et constitués, soit d'une couronne de trous indépendants inclinés à angle fixe, soit d'une rangée de pales statiques.

Cette architecture a pour avantage de prélever une faible puissance sur le rotor et de ne pas trop favoriser une augmentation de température dans la turbine.

Néanmoins, les injecteurs axiaux ont l'inconvénient d'engendrer une mauvaise maitrise des étanchéités situées à proximité de l'injecteur et ne garantissent pas une bonne maîtrise du débit d'air, ni une bonne répartition de la ventilation.

On connait déjà d'après les documents EP 3 228 816, DE 10 2007 007090 et US 2011/250057 des injecteurs comprenant une couronne annulaire munie d'une pluralité de canaux d'éjection d'air. Toutefois, de tels canaux ne s'étendent pas dans un plan radial de la couronne.

On connait également d'après les documents EP 3 130 753 et US 2014/072420 des injecteurs radiaux de turbomachine se présentant sous la forme d'une couronne munie d'une pluralité de canaux d'éjection d'air. Toutefois, ces canaux ne présentent pas une section d'entrée comprenant un triangle et ces injecteurs ne peuvent pas être fabriqués par fabrication additive.

En conséquence, il serait souhaitable de disposer d'un injecteur radial permettant de garantir une maitrise du débit d'air, tout en permettant de le répartir de sorte à refroidir au mieux la turbine.

Il est précisé que dans la présente demande on définit comme direction axiale une direction sensiblement parallèle à l'axe de rotation de la turbomachine, et on définit comme direction radiale une direction sensiblement perpendiculaire à la direction axiale (et donc à l'axe de rotation de la turbomachine.

### EXPOSE DE L'INVENTION

Selon un premier aspect, l'invention propose un injecteur de turbine comprenant une couronne annulaire s'étendant autour d'un axe longitudinal et présentant une bordure radialement extérieure et une bordure radialement intérieure. En outre, la couronne présente une pluralité de canaux destinés à relier fluidiquement la bordure radialement extérieure à la bordure radialement intérieure. Chaque canal s'étend dans un plan radial de la couronne et présente une ouverture d'entrée à proximité de la bordure extérieure et une ouverture de sortie à proximité de la bordure radialement intérieure. Chaque canal présente une variation progressive de son orientation selon une composante tangentielle entre la section d'entrée de l'ouverture d'entrée et la section de sortie de l'ouverture de sortie. D'une manière particulièrement avantageuse, la variation de l'orientation du canal, selon une composante tangentielle, permet d'assurer une accélération régulière et la mise en giration d'un écoulement de gaz dans le canal. Ainsi, cette disposition permet avantageusement d'imprimer une vitesse tangentielle à l'air de refroidissement, ce qui, en fonctionnement permet limiter l'échauffement d'un disque de rotor de turbine situé en regard de l'injecteur. En sus, cette disposition permet de garantir la maitrise du débit d'air, tout en permettant de le répartir de sorte à refroidir au mieux la turbine.

Chaque canal peut présenter une section de sortie majoritairement orientée tangentiellement.

Pour chaque canal, la variation de l'orientation peut être monotone entre la section d'entrée et la section de sortie.

Pour chaque canal, la section de sortie du canal peut être géométriquement différente de la section d'entrée du canal et/ou présente une aire inférieure à l'aire de la section d'entrée du canal.

Chaque section d'entrée présente selon l'invention la forme d'un parallélogramme surmonté d'un triangle, ou la forme d'un triangle.

Chaque section d'entrée peut présenter des arêtes arrondies.

Chaque section de sortie peut présenter sensiblement une forme en parallélogramme, préférentiellement une forme de rectangle.

Chaque canal peut présenter une paroi d'épaisseur constante.

L'injecteur selon l'invention est obtenu par fabrication additive. Selon un autre aspect, l'invention concerne une turbomachine comprenant au moins un injecteur selon l'invention.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

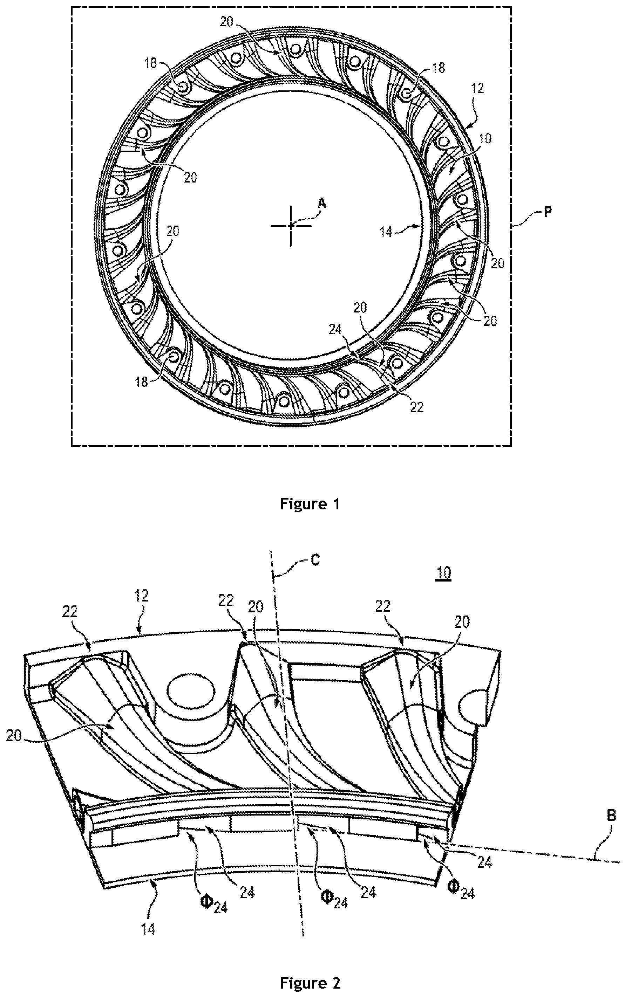

La figure 1 est une vue dans un plan radial d'un injecteur selon l'invention.
La figure 2 est une vue partielle, en perspective des canaux d'un injecteur selon l'invention.

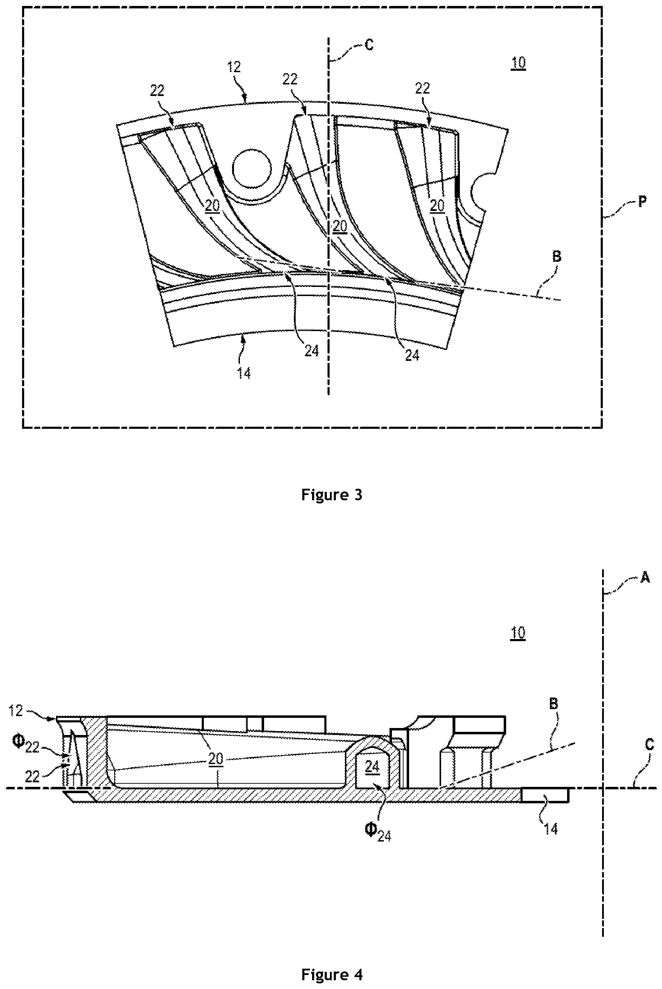

La figure 3 est une vue partielle, dans un plan radial, des canaux d'un injecteur selon l'invention.
La figure 4 est une vue partielle, en coupe, dans un plan longitudinal de canaux d'un injecteur selon l'invention.
La figure 5 est une vue partielle, dans un plan longitudinal, d'ouvertures d'entrée de canaux d'un injecteur selon l'invention.
La figure 6 est une représentation schématique de la forme d'une section d'entrée d'un canal d'un injecteur selon l'invention.

Sur l'ensemble des figures, les éléments similaires portent des références identiques.

### DESCRIPTION DETAILLEE DE L'INVENTION

### Architecture générale

Selon un premier aspect, l'invention concerne un injecteur pour une turbine haute pression comprenant une couronne 10 annulaire s'étendant autour d'un axe longitudinal A et présentant une bordure extérieure 12 et une bordure intérieure 14.

Il est précisé que dans le présent document on définit comme axe longitudinal A un axe sensiblement colinéaire ou du moins parallèle à l'axe de rotation de la turbomachine, et on définit comme axe radial C un axe sensiblement perpendiculaire à l'axe longitudinal A (et donc à l'axe de rotation de la turbomachine).

L'axe longitudinal A est l'axe de révolution de la couronne 10. Ainsi, en partant de l'axe longitudinal A, selon une direction radiale, on rencontrera tout d'abord la bordure intérieure 14 qui est sensiblement annulaire, puis on rencontrera la bordure extérieure 12 qui est sensiblement annulaire.

La couronne 10 présente une pluralité de canaux 20 destinés à relier un circuit d'air provenant d'une chambre de combustion aux circuits de refroidissement et d'étanchéité d'une turbine.

Selon une disposition particulièrement avantageuse, chaque canal 20 s'étend dans le plan P de la couronne 10. Il est précisé que le plan P de la couronne est normal à l'axe longitudinal A. Chaque canal 20 présente une ouverture d'entré 22 à proximité de la bordure extérieure 12 et une ouverture de sortie 24 à proximité de la bordure intérieure 14.

En outre, la couronne 10 présente une série de perçages longitudinaux 18 (i.e. parallèles à l'axe longitudinal A et perpendiculaire au plan P). Les perçages longitudinaux 18 permettent de visser ou riveter la couronne 10 dans une turbomachine.

### Forme et structure de chaque canal

D'une manière particulièrement avantageuse, chaque canal 20 présente une variation progressive de son orientation selon une composante tangentielle entre la section d'entrée Φ₂₂ de l'ouverture d'entrée 22 et la section de sortie Φ₂₄ de l'ouverture de sortie 24. Préférentiellement, la variation progressive d'orientation est monotone. Plus précisément, par variation progressive d'orientation, il est entendu, une variation de l'orientation d'un vecteur normal au centre d'une section du canal 20 et ayant pour origine le centre de ladite section.

D'une manière préférentielle, la section de sortie Φ₂₄ est orientée selon une direction non radiale. Préférentiellement, la section de sortie Φ₂₄ est orientée selon une direction présentant une composante tangentielle B par rapport à l'axe longitudinal A. Il est précisé que par composante tangentielle, on entend une composante (i.e. une direction) appartenant au plan P de la couronne 10 et sensiblement tangente à la bordure intérieure 14. Il est précisé que dans le présent document, l'orientation d'une section s'évalue vis-à-vis de l'orientation d'un vecteur qui a pour origine le centre de ladite section et qui est normal à ladite section.

En outre, d'une manière particulièrement avantageuse, la section d'entrée Φ₂₂ est orientée selon une direction présentant une composante sensiblement radiale C par rapport à l'axe longitudinal A. Il est précisé que par sensiblement radiale, il est entendu que la composante C peut être inclinée d'une vingtaine de degrés par rapport à un axe radial strictement perpendiculaire à l'axe longitudinal A et appartenant au plan radial P.

En d'autres termes, selon ces dispositions les canaux sont coudés avec une section d'entrée Φ₂₂ orientée selon une composante radiale C et une section de sortie Φ₂₄ orientée selon une composante tangentielle B. Tel que cela sera détaillé ci-après, cette courbure et l'orientation de la section de sortie Φ₂₂ sont des dispositions particulièrement avantageuses de l'invention.

De plus, selon une autre disposition avantageuse, chaque section de sortie Φ₂₄ de chaque canal est géométriquement différente de la section d'entrée Φ₂₂ correspondante. Chaque section d'entrée Φ₂₂ présente une aire supérieure à l'aire de la section de sortie Φ₂₄ correspondante. Selon une disposition préférentielle, on cherchera à avoir le rapport « aire de la section d'entrée Φ₂₂ sur aire de la section de sortie Φ₂₄ » le plus élevé possible.

Néanmoins, ce rapport est limité par les contraintes d'intégration dans une turbomachine. Aussi, dans le cadre d'une intégration dans une turbomachine telle que fabriquée par la demanderesse, on privilégiera un rapport compris entre 1 et 10.

Tel que cela sera détaillé ultérieurement, la synergie de la variation de l'orientation du canal 20, selon une composante tangentielle, permet d'assurer une accélération régulière et la mise en giration d'un écoulement de gaz dans le canal 20. En d'autres termes, cette disposition permet d'imprimer une vitesse tangentielle à l'air de refroidissement, ce qui, en fonctionnement permet limiter l'échauffement d'un disque de rotor de turbine situé en regard de l'injecteur.

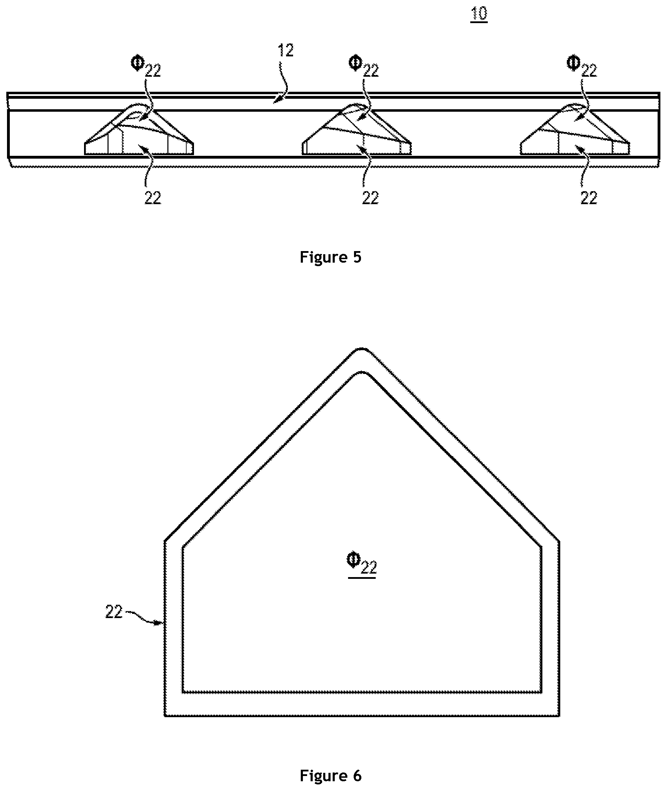

Typiquement, chaque section d'entrée Φ₂₂ peut présenter la forme d'un parallélogramme surmonté d'un triangle, tel que représenté sur la figure 6. Selon une autre disposition chaque section d'entrée Φ₂₂ peut présenter la forme d'un triangle. D'une manière générale, la forme en triangle peut présenter des arêtes arrondies. En d'autres termes, les arêtes de la forme en triangle peuvent être des congés.

En outre, la section de sortie Φ₂₄ peut présenter une forme en parallélogramme. Préférentiellement la section de sortie Φ₂₄ peut présenter une forme en rectangle avec des parois bombées (convexes).

Ainsi, selon un mode de réalisation préférentiel, la section évolue d'une forme en rectangle surmonté d'un triangle vers une forme en rectangle avec des parois bombées (convexes)

Selon une disposition particulière, une enveloppe de chaque canal 20 varie d'une forme de la section d'entrée Φ₂₂ à une forme de la section de sortie Φ₂₄.

Préférentiellement, l'enveloppe de chaque canal 20 présente une paroi d'épaisseur constante. Néanmoins, selon un autre mode de réalisation, l'enveloppe de chaque canal 20 peut présenter une paroi d'épaisseur variable.

Selon une disposition particulière, Chaque canal 20 peut présenter une longueur pouvant aller de 10 à 100 millimètres.

### Fonctionnement

En fonctionnement, un flux de gaz pénètre dans l'ouverture d'entrée de chaque canal 20.

La variation de section et la courbure de chaque canal 20 permet d'accélérer le flux de gaz qui s'échappe par l'ouverture de sortie 24 de chaque canal 20. Cette disposition permet de maximiser la vitesse tangentielle de l'air en sortie de l'injecteur. La maximisation de la vitesse tangentielle de l'air en sortie d'injecteur est une disposition particulièrement avantageuse de l'invention car Elle permet de limiter l'échauffements de la roue mobile située en regard des injecteurs. Plus la vitesse tangentielle de l'air en sortie d'injecteur est élevée, plus le refroidissement de la roue mobile est efficace. De préférence, la vitesse tangentielle de l'air issu des injecteurs est sensiblement égale à la vitesse tangentielle de la roue mobile au rayon où l'air des injecteurs parvient sur la roue mobile située en regard.

D'une manière particulièrement avantageuse, l'orientation tangentielle de l'ouverture de sortie 24 de chaque canal 20 permet d'avoir un flux tangentiel.

En outre, il est remarquable que préférentiellement, les canaux 20 sont agencés de sorte que la section d'entrée Φ₂₂ de chaque canal soit orientée sensiblement perpendiculairement à une veine principale d'écoulement de l'air dans le canal.

Plus précisément, pour apprécier pleinement l'effet de l'injecteur, on peut se baser sur le coefficient d'entrainement (Ke) qui correspond au rapport Vti/Vtm avec Vti la vitesse tangentielle des gaz en sortie des injecteurs et Vtm la vitesse tangentielle de la roue mobile au rayon considéré. L'injecteur selon l'invention permet l'obtention d'un Ke relativement élevé par rapport au injecteurs connus. Typiquement, l'injecteur selon l'invention permet d'obtenir un Ke compris entre 1 et 1.5.

Ainsi, l'invention propose un injecteur fournissant un certain débit et qui accélère la vitesse des gaz qui les traversent de sorte à ce que la vitesse tangentielle des gaz en sortie des canaux 20 soit sensiblement égale à la vitesse tangentielle d'une roue mobile située en regard en fonctionnement. Cela permet de refroidir efficacement la roue mobile. Grâce à l'injection d'un flux de refroidissement avec une vitesse ayant une importante composante tangentielle.

En d'autres termes, pour un débit cible donné, l'injecteur selon l'invention permet de fournir une vitesse tangentielle importante grâce à des canaux 20, plus compactes, plus facilement fabricables et plus légers que les canaux des injecteurs connus.

### Procédé de fabrication

Selon un autre aspect, l'invention concerne un procédé de fabrication additive de l'injecteur.

D'une manière connue le procédé de fabrication additive peut comprendre la superposition de couches de poudre fondues par une source d'énergie telle qu'un laser ou un canon à électrons.

### Turbomachine

Selon un autre aspect, l'invention concerne une turbomachine intégrant un injecteur selon l'invention.

### Aéronef

Selon un autre aspect, l'invention concerne un aéronef intégrant au moins une turbomachine comprenant l'injecteur selon l'invention.

## Revendications

1. Injecteur de turbine comprenant une couronne (10) annulaire s'étendant autour d'un axe longitudinal (A) et présentant une bordure radialement extérieure (12) et une bordure radialement intérieure (14), la couronne (10) présentant une pluralité de canaux (20) destinés à relier fluidiquement la bordure radialement extérieure (12) à la bordure radialement intérieure (14),
chaque canal (20) s'étendant dans un plan radial (P) de la couronne (10) et présentant une ouverture d'entrée (22) à proximité de la bordure extérieure (12) et une ouverture de sortie (24) à proximité de la bordure radialement intérieure (14), chaque canal (20) présentant une variation progressive de son orientation selon une composante tangentielle entre la section d'entrée (Φ₂₂) de l'ouverture d'entrée (22) et la section de sortie (Φ₂₄) de l'ouverture de sortie (24), **caractérisé en ce qu'**il est obtenu par fabrication additive et **en ce que** chaque section d'entrée (Φ₂₂) présente la forme d'un parallélogramme surmonté d'un triangle, ou la forme d'un triangle.

2. Injecteur selon la revendication 1 dans lequel chaque canal (20) présente une section de sortie (Φ₂₄) orientée tangentiellement.

3. Injecteur selon l'une quelconque des revendications 1 ou 2, dans lequel, pour chaque canal (20), la variation de l'orientation est monotone entre la section d'entrée (Φ₂₂) et la section de sortie (Φ₂₄).

4. Injecteur selon l'une quelconque des revendication 1 à 3, dans lequel, pour chaque canal (20), la section de sortie (Φ₂₄) du canal (20) est géométriquement différente de la section d'entrée (Φ₂₂) du canal (20) et/ou présente une aire inférieure à l'aire de la section d'entrée (Φ₂₂) du canal (20).

5. Injecteur selon l'une quelconque des revendications précédentes, dans lequel chaque section d'entrée (Φ₂₂) présente des arêtes arrondies.

6. Injecteur selon la revendication 4, dans lequel chaque section de sortie (Φ₂₄) présente une forme en parallélogramme.

7. Injecteur selon la revendication 6, dans lequel chaque section de sortie (Φ₂₄) présente une forme de rectangle.

8. Injecteur selon l'une quelconque des revendications 1 à 7, dans lequel chaque canal (20) présente une paroi d'épaisseur constante.

9. Turbomachine comprenant au moins un injecteur selon l'une quelconque des revendications 1 à 8.

## Patentansprüche

1. Injektor für eine Turbine, umfassend einen ringförmigen Kranz (10), der sich um eine Längsachse (A) erstreckt und einen radial äußeren Rand (12) und einen radial inneren Rand (14) aufweist, wobei der Kranz (10) eine Vielzahl von Kanälen (20) aufweist, die zur fluidischen Verbindung des radial äußeren Randes (12) mit dem radial inneren Rand (14) bestimmt sind,
wobei sich jeder Kanal (20) in einer radialen Ebene (P) des Kranzes (10) erstreckt und eine Einlassöffnung (22) in der Nähe des äußeren Randes (12) und eine Auslassöffnung (24) in der Nähe des radial inneren Randes (14) aufweist, wobei jeder Kanal (20) eine allmähliche Änderung seiner Ausrichtung gemäß einer tangentialen Komponente zwischen dem Einlassabschnitt (Φ₂₂) der Einlassöffnung (22) und dem Auslassabschnitt (Φ₂₄) der Auslassöffnung (24) aufweist, **dadurch gekennzeichnet, dass** er durch additive Fertigung hergestellt ist und dass jeder Einlassabschnitt (Φ₂₂) die Form eines Parallelogramms mit einem Dreieck darüber oder die Form eines Dreiecks aufweist.

2. Injektor nach Anspruch 1, wobei jeder Kanal (20) einen tangential ausgerichteten Auslassabschnitt (Φ₂₄) aufweist.

3. Injektor nach einem der Ansprüche 1 oder 2, wobei für jeden Kanal (20) die Änderung der Ausrichtung zwischen dem Einlassabschnitt (Φ₂₂) und dem Auslassabschnitt (Φ₂₄) monoton ist.

4. Injektor nach einem der Ansprüche 1 bis 3, wobei für jeden Kanal (20) der Auslassabschnitt (Φ₂₄) des Kanals (20) vom Einlassabschnitt (Φ₂₂) des Kanals (20) geometrisch unterschiedlich ist und/oder eine Fläche aufweist, die kleiner ist als die Fläche des Einlassabschnitts (Φ₂₂) des Kanals (20).

5. Injektor nach einem der vorangehenden Ansprüche, wobei jeder Einlassabschnitt (Φ₂₂) abgerundete Kanten aufweist.

6. Injektor nach Anspruch 4, wobei jeder Auslassabschnitt (Φ₂₄) eine Parallelogrammform aufweist.

7. Injektor nach Anspruch 6, wobei jeder Auslassabschnitt (Φ₂₄) eine Rechteckform aufweist.

8. Injektor nach einem der Ansprüche 1 bis 7, wobei jeder Kanal (20) eine Wand mit konstanter Dicke aufweist.

9. Turbomaschine, die mindestens einen Injektor nach einem der Ansprüche 1 bis 8 umfasst.

## Claims

1. A turbine injector comprising an annular ring (10) extending around a longitudinal axis (A) and having a radially outer edge (12) and a radially inner edge (14), the ring (10) having a plurality of channels (20) intended to fluidly connect the radially outer edge (12) to the radially inner edge (14), each channel (20) extending in a radial plane (P) of the ring (10) and having an inlet opening (22) near the outer edge (12) and an outlet opening (24) near the radially inner edge (14), each channel (20) having a progressive variation of its orientation according to a tangential component between the inlet section (_{Φ22}) of the inlet opening (22) and the outlet section (_{Φ24}) of the outlet opening (24), **characterized in that** it is obtained by additive manufacturing and **in that** each inlet section (_{Φ22}) has the shape of a parallelogram surmounted by a triangle, or the shape of a triangle.

2. The injector according to claim 1, wherein each channel (20) has a tangentially oriented outlet section (_{Φ24}).

3. The injector according to any one of claims 1 or 2, wherein, for each channel (20), the variation in orientation is monotonic between the inlet section (_{Φ22}) and the outlet section (_{Φ24}).

4. The injector according to any one of claims 1 to 3, wherein, for each channel (20), the outlet section (_{Φ24}) of the channel (20) is geometrically different from the inlet section (_{Φ22}) of the channel (20) and/or has a smaller area than the area of the inlet section (_{Φ22}) of the channel (20).

5. The injector according to any of the preceding claims, wherein each inlet section (_{Φ22}) has rounded edges.

6. The injector according to claim 4, wherein each outlet section (_{Φ24}) has a parallelogram shape.

7. The injector according to claim 6, wherein each outlet section (_{Φ24}) has a rectangular shape.

8. The injector according to any one of claims 1 to 7, in which each channel (20) has a wall of constant thickness.

9. A turbomachine comprising at least one injector according to any one of claims 1 to 8.
